# EUROPÄISCHE PATENTANMELDUNG

(11) **EP 2 151 393 A1**
(43) Veröffentlichungstag der Anmeldung: **10.02.2010**
(21) Anmeldenummer: 08161792.0
(22) Anmeldetag: 05.08.2008
(51) Int. Cl.: B65D 5/76, G01F 11/26

(54) **Verpackung und Zuschnitt zur Herstellung einer Verpackung**

(71) Anmelder: Neupack Gesellschaft m.b.H., 2651 Reichenau (AT)
(72) Erfinder: Djuric, Ivica, 2651 Reichenau (AT)
(74) Vertreter: Hofstetter, Alfons J.

(57) **Zusammenfassung**

Die vorliegende Erfindung betrifft eine Verpackung zur Aufbewahrung und dosierten Abgabe von Waren, insbesondere von rieselfähigem Schüttgut, umfassend eine Dosierkammer (12) die innerhalb eines Verpackungsinnenraums (14) angeordnet ist und einen Öffnungs- und Verschlussmechanismus (16) zum Öffnen und Schließen der Verpackung (10). Dabei umfasst der Öffnungs- und Verschlussmechanismus (16) mindestens eine mit einem Deckelelement (18) der Verpackung (10) verbundene Sperrlasche (20) umfasst, wobei die Sperrlasche (20) derart ausgebildet ist, dass sie in geschlossenem Zustand der Verpackung (10) mindestens eine Ausschüttöffnung (22) verschließt und mindestens eine innenliegende Öffnung (24) zwischen dem Verpackungsinnenraum (14) und der Dosierkammer (12) freigibt und in geöffnetem Zustand der Verpackung (10) die Ausschüttöffnung (22) freigibt und die innenliegende Öffnung (24) verschließt. Die Erlinfung betrifft weiterhin einen Zuschnitt (50) zur Herstellung einer Verpackung zur Aufbewahrung und dosierten Abgabe von Waren, insbesondere von rieselfähigem Schüttgut.

## Beschreibung

Die vorliegende Erfindung betrifft eine Verpackung zur Aufbewahrung und dosierten Abgabe von Waren, insbesondere von rieselfähigem Schüttgut, umfassend eine Dosierkammer die innerhalb eines Verpackungsinnenraums angeordnet ist und einen Öffnungs- und Verschlussmechanismus zum Öffnen und Schließen der Verpackung. Die Erfindung betrifft weiterhin einen Zuschnitt zur Herstellung einer Verpackung zur Aufbewahrung und dosierten Abgabe von Waren, insbesondere von rieselfähigem Schüttgut.

Verpackungen zur Aufbewahrung und dosierten Abgabe von Waren und Zuschnitte zur Herstellung derartiger Verpackungen sind in einer Vielzahl unterschiedlichster Ausführungsformen bekannt. So beschreibt die WO 03/076304 A1 eine in eine Verpackung einsetzbare Dosierschütte mit mehreren Kammern. Die unterschiedliche Befüllung und Entleerung dieser Kammern führt zu einer entsprechend dosierten Abgabe der sich innerhalb der Verpackung befindlichen Waren. Nachteilig an dieser Verpackung ist jedoch, dass diese relativ aufwändig herstellbar ist und daher nur mit relativ hohem Kostenaufwand produziert und vertrieben werden kann. Eine einfachere Lösung zur Herstellung einer Verpackung zur Aufbewahrung und dosierten Abgabe von Waren ist in der US 2,393,262 beschrieben. Hier werden eine Verpackung und ein Zuschnitt zur Herstellung der Verpackung beschrieben, bei dem eine innerhalb der Verpackung angeordnete Dosierkammer einstückig mit der Grundverpackung verbunden ist. Durch entsprechendes Einfalten ergibt sich eine Verpackung mit einer innenliegenden Dosierschütte. Nachteilig an dieser Verpackungslösung ist jedoch, dass nach einem Öffnen der Verpackung kein Wiederverschluss möglich ist. Insbesondere bei der Aufbewahrung und Abgabe von rieselfähigem Schüttgut entstehen dadurch erhebliche Nachteile.

Es ist daher Aufgabe der vorliegenden Erfindung, eine gattungsgemäße Verpackung bereitzustellen, welche kostengünstig herstellbar ist und einen sicheren Wiederverschluss der Verpackung sowie eine dosierbare Abgabe der aufbewahrten Waren gewährleistet.

Es ist weiterhin Aufgabe der vorliegenden Erfindung, einen gattungsgemäßen Zuschnitt zur Herstellung einer Verpackung bereitzustellen, welcher eine kostengünstige Herstellung der Verpackung, einen sicheren Wiederverschluss der fertigen Verpackung sowie eine dosierbare Abgabe der aufbewahrten Waren ermöglicht.

Zur Lösung dieser Aufgaben dienen eine Verpackung mit den Merkmalen des Anspruchs 1 sowie ein Zuschnitt mit den Merkmalen des Anspruchs 11.

Vorteilhafte Ausgestaltungen der erfindungsgemäßen Verpackung und des erfindungsgemäßen Zuschnitts sind in den jeweiligen Unteransprüchen beschrieben.

Eine erfindungsgemäße Verpackung zur Aufbewahrung und dosierten Abgabe von Waren, insbesondere von rieselfähigem Schüttgut, umfasst eine Dosierkammer, die innerhalb eines Verpackungsinnenraums angeordnet ist und einen Öffnungs- und Verschlussmechanismus zum Öffnen und Schließen der Verpackung. Dabei umfasst der Öffnungs- und Verschlussmechanismus mindestens eine mit einem Deckelelement der Verpackung verbundene Sperrlasche, wobei die Sperrlasche derart ausgebildet ist, dass sie in geschlossenem Zustand der Verpackung mindestens eine Ausschüttöffnung verschließt und mindestens eine innenliegende Öffnung zwischen dem Verpackungsinnenraum und der Dosierkammer freigibt und im geöffneten Zustand der Verpackung die Ausschüttöffnung freigibt und die innenliegende Öffnung verschließt. Dadurch ist ein sicherer Wiederverschluss der Verpackung sowie eine dosierte Abgabe der aufbewahrten Waren gewährleistet. Zudem kann die erfindungsgemäße Verpackung aus einem einstückigen Zuschnitt hergestellt werden, so dass keine separaten Elemente, insbesondere Öffnungs- und Verschlusselemente, bereitgestellt werden müssen. Die Sperrlasche ist dabei aus einem ersten Abdeckbereich zur Abdeckung der Ausschüttöffnung und einem zweiten Abdeckbereich zur Abdeckung der innenliegenden Öffnung ausgebildet und entsprechend dimensioniert.

In einer vorteilhaften Ausgestaltung der erfindungsgemäßen Verpackung besteht das Deckelelement aus mindestens zwei miteinander verbundenen und übereinander angeordneten Deckellaschen, wobei die Sperrlasche mit einer Innenseite der in den Verpackungsinnenraum ragenden Deckellasche im Bereich der Ausschüttöffnung zumindest teilweise verbunden ist. So kann jeweils ein erster Teilbereich der Deckellaschen über jeweils mindestens eine, die Ausschüttöffnung begrenzende Biegelinie von jeweils einem zweiten Teilbereich getrennt sein, wobei die Biegelinien ungefähr übereinander angeordnet sind und die Grenze zwischen dem ersten Abdeckbereich und dem zweiten Abdeckbereich der Sperrlasche definieren. Durch die zumindest teilweise Verbindung der Sperrlasche mit der innenliegenden Deckellasche kann diese über die Biegelinien der Deckellaschen bewegt werden. So wird bei einer Öffnung der Verpackung und der Freigabe der Ausschüttöffnung der zweite Abdeckbereich der Sperrlasche gegen die innenliegende Öffnung zwischen der Dosierkammer und dem Verpackungs-innenraum gedrückt. Dadurch ist gewährleistet, dass nur Waren, die sich in der Dosierkammer befinden, über die Ausschüttöffnung abgegeben werden. Wird die Ausschüttöffnung mittels der Deckellaschen und der daran angeordneten Sperrlasche verschlossen, so gibt der zweite Abdeckbereich der Sperrlasche die innenliegende Öffnung wieder frei, so dass Waren aus dem Verpackungs-innenraums in die Dosierkammer gelangen können. Die Biegelinien der beiden Deckellaschen bilden daher eine Art Gelenk für die Sperrlasche aus.

In weiteren vorteilhaften Ausgestaltungen der erfindungsgemäßen Verpackung weist die Sperrlasche eine über den Verpackungsrand ragende Griff- und Klemmlasche auf. Dabei kann die Griff- und Klemmlasche im geschlossenen Zustand der Verpackung über eine ihren Umfang definierende Perforationslinie mit einer vorderen Seitenwand der Verpackung einstückig verbunden sein. Auch die Sperrlasche kann im geschlossenen Zustand der Verpackung über eine Perforationslinie mit der vorderen Seitenwand der Verpackung einstückig verbunden sein. Zum Öffnen der Verpackung werden sowohl die Sperrlasche wie auch die Griff- und Klemmlasche entlang der entsprechenden Perforationslinien von der Verpackung gelöst. Durch diese Maßnahmen ist ein einfaches Öffnen der erfindungsgemäßen Verpackung gewährleistet. Zudem kann die Griff- und Klemmlasche zum Wiederverschluss der Verpackung in die entsprechende Ausnehmung in der vorderen Seitenwand der Verpackung verrastet werden.

In weiteren vorteilhaften Ausgestaltungen der erfindungsgemäßen Verpackung ist der erste Teilbereich der Deckellasche im geschlossenen Zustand der Verpackung über eine Perforationslinie mit einer seitlichen Seitenwand der Verpackung und der erste Teilbereich der weiteren Deckellasche im geschlossenen Zustand der Verpackung über eine weitere Perforationslinie, die der ersten Perforationslinie parallel gegenüberliegt, mit einer seitlichen Seitenwand der Verpackung jeweils einstückig verbunden. Durch die Ausgestaltung der genannten Perforationslinien können die ersten Teilbereiche der Deckellaschen ohne Weiteres von der übrigen Verpackung gelöst werden, so dass die Ausschüttöffnung ausgebildet wird. Die Länge und Breite der ersten Teilbereiche der Deckellaschen entsprechen dabei ungefähr der Länge und Breite der Ausschüttöffnung. Auch andere Dimensionierungen sind möglich.

In einer weiteren vorteilhaften Ausgestaltung der erfindungsgemäßen Verpackung umfasst die Dosierkammer eine innerhalb des Verpackungsinnenraums angeordnete Innenwand mit der innenliegenden Öffnung, wobei die innenliegende Öffnung vor einem ersten Öffnen der Verpackung verschlossen ausgebildet ist. Dabei kann die innenliegende Öffnung mittels eines einstückig über eine Perforationslinie mit der Innenwand verbundenen Verschlusselements verschlossen sein. Dadurch ist gewährleistet, dass vor einem ersten Öffnen der Verpackung eine sichere Trennung zwischen Verpackungsinnenraum und der Dosierkammer erfolgt. Zudem ist eine sichere Befüllung des Verpackungsinnenraums mit den entsprechenden Waren gewährleistet.

Ein erfindungsgemäßer Zuschnitt zur Herstellung einer Verpackung zur Aufbewahrung und dosierten Abgabe von Waren, insbesondere von rieselfähigem Schüttgut, umfasst mittels dreier Biegelinien verbundene Seitenwände zur Ausbildung eines Verpackungsinnenraums in gefaltetem Zustand des Zuschnitts. Dabei ist der Zuschnitt einstückig ausgebildet, wobei zur Ausbildung eines Öffnungs- und Verschlussmechanismus mindestens eine Sperrlasche, die über eine Biege- und Perforationslinie mit der vorderen Seitenwand im Deckelbereich des Zuschnitts verbunden und davon abtrennbar ist und mindestens zwei Deckellaschen im Deckelbereich des Zuschnitts angeordnet sind und die Deckellaschen über Biegelinien mit den seitlichen Seitenwänden im Deckelbereich des Zuschnitts ebenfalls verbunden sind, wobei die Deckellaschen jeweils einen ersten Teilbereich aufweisen, der über jeweils mindestens eine Biegelinie von jeweils einem zweiten Teilbereich getrennt ist, wobei die Länge A der ersten Teilbereiche kleiner ist als die Länge B der Sperrlasche. Die Länge A entspricht dabei der Länge einer Perforationslinie, die zwischen den jeweils ersten Teilbereichen und den entsprechenden seitlichen Seitenwänden ausgebildet ist. Des Weiteren wird die Länge A auch durch den Abstand der jeweiligen Biegelinie zwischen dem jeweiligen ersten und zweiten Teilbereich der Deckellaschen und dem zweiten Teilbereich gegenüberliegenden Ende der jeweiligen Deckellasche definiert. Die Länge B der Sperrlasche wird definiert durch die Biege- und Perforationslinie und dem entsprechenden gegenüberliegenden Ende der Sperrlasche. Durch den erfindungsgemäßen Zuschnitt ist es möglich, eine Verpackung kostengünstig herzustellen, die einen sicheren Wiederverschluss der fertigen Verpackung sowie eine dosierbare Abgabe der aufbewahrten Waren ermöglicht. Dabei wird durch die Ausbildung der Sperrlasche sowohl der Wiederverschluss wie auch die dosierte Abgabe von Waren ermöglicht. Da der Zuschnitt einstückig ausgebildet ist, ist dieser wie auch die Verpackung insgesamt kostengünstig herstellbar.

In einer weiteren vorteilhaften Ausgestaltung des erfindungsgemäßen Zuschnitts weist die Sperrlasche eine Griff- und Klemmlasche auf, wobei die Griff- und Klemmlasche über eine ihren Umfang definierende Perforationslinie mit einer vorderen Seitenwand der Verpackung einstückig verbunden ist. Durch die Griff- und Klemmlasche ist einerseits ein leichtes Öffnen der fertigen Verpackung möglich, andererseits ergibt sich ein sicherer Wiederverschluss durch ein Verrasten der Klemmlasche in der zuvor über die Perforationslinie in der vorderen Seitenwand ausgebildete Ausnehmung.

In weiteren vorteilhaften Ausgestaltungen des erfindungsgemäßen Zuschnitts ist zur Ausbildung einer Dosierkammer die vordere Seitenwand an der der seitlichen Seitenwand gegenüberliegenden Seite mit einem Wandelement über eine Biegelinie verbunden, wobei das Wandelement über eine weitere, parallel zur Biegelinie verlaufende Biegelinie mit einer Innenwand der Dosierkammer verbunden ist und die Innenwand eine Klebelasche aufweist, die ebenfalls über eine parallel zur Biegelinie zwischen dem Wandelement und der Innenwand verlaufende weitere Biegelinie mit der Innenwand verbunden ist. Dabei kann zur Ausbildung einer innenliegenden Öffnung mindestens ein Verschlusselement im Deckelbereich des Zuschnitts mittels einer Perforationslinie in der Innenwand ausgeprägt sein. Durch die einstückige Ausbildung der die Dosierkammer ausbildenden Elemente mit der vorderen Seitenwand ist eine kostengünstige und einfache Herstellung der Verpackung insgesamt gewährleistet. Vor einem ersten Öffnen der Verpackung ist der Bereich zwischen der Dosierkammer und dem Verpackungsinnenraum durch die Innenwand komplett verschlossen. Nach einem Öffnen der Verpackung wird das Verschlusselement entnommen, so dass eine innenliegende Öffnung zwischen dem Verpackungsinnenraum und der Dosierkammer entsteht. Durch die zunächst vollständige Trennung des Verpackungsinnenraums von der Dosierkammer ist gewährleistet, dass keine Waren durch den Befüllungsprozess oder während des Transports der Verpackung von dem Verpackungsinnenraum in die Dosierkammer gelangen können.

Weitere Einzelheiten, Merkmale und Vorteile der Erfindung ergeben sich aus der folgenden Beschreibung der in den Figuren dargestellten Ausführungsbeispiele. Es zeigen
- Figur 1: eine schematische Darstellung einer erfindungsgemäßen Verpackung;
- Figur 2: eine schematische Schnittdarstellung der Verpackung gemäß Figur 1; und
- Figur 3: eine Darstellung eines erfindungsgemäßen Zuschnitts.

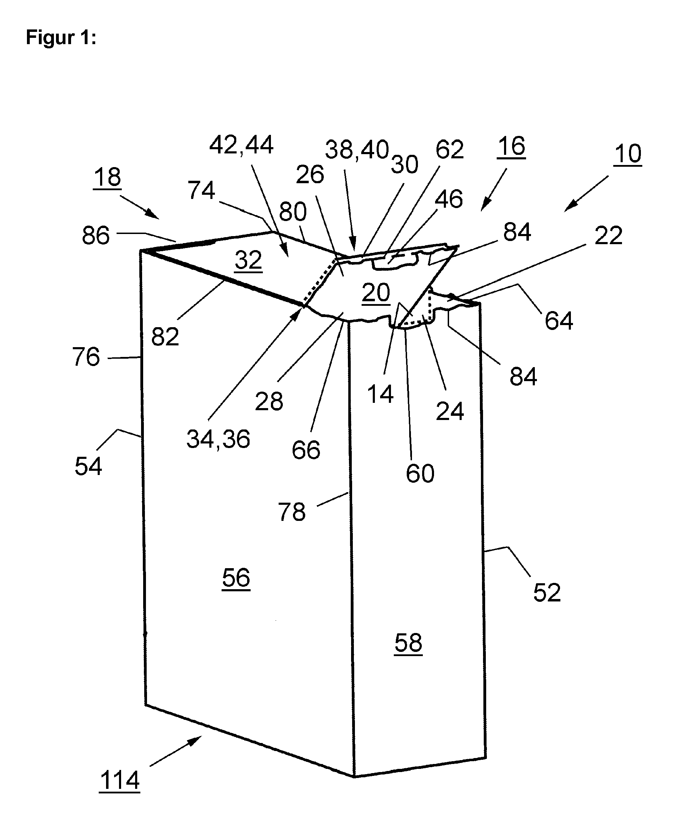

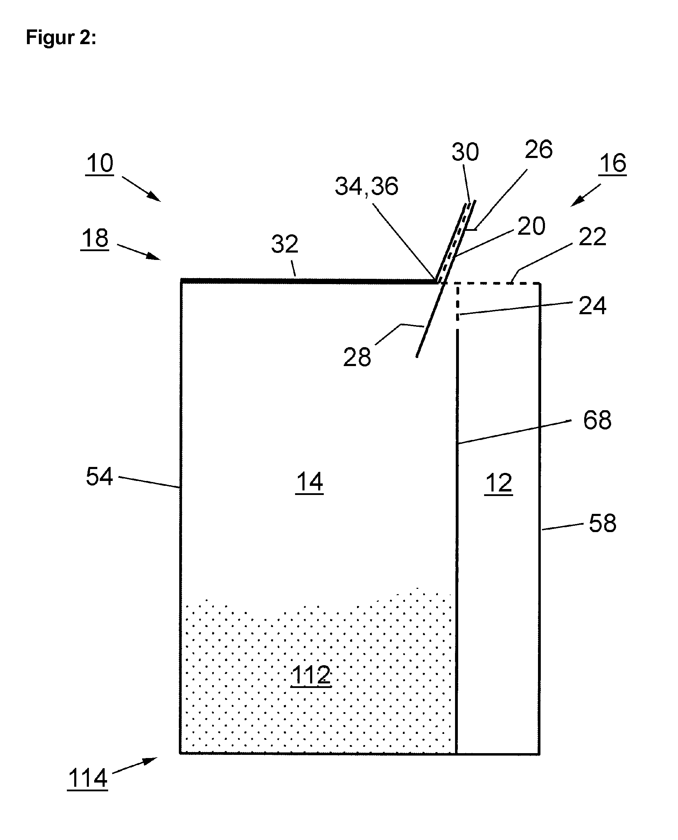

Die Figur 1 zeigt eine schematische Darstellung einer Verpackung 10 zur Aufbewahrung und dosierten Abgabe von Waren, insbesondere eines rieselfähigen Schüttgutes 112 (vergleiche Figur 2). Ein Verpackungsinnenraum 14 wird durch miteinander verbundene Seitenwände 52, 54, 56, 58 ausgebildet. Die Seitenwände 52, 54, 56, 58 sind dabei über drei Biegelinien 74, 76, 78 einstückig miteinander verbunden. Zur Abdeckung der Verpackung des Verpackungsinnenraums 14 ist ein Deckelelement 18 ausgebildet. An dem dem Deckelelement gegenüberliegenden Bereich ist ein Bodenelement 114 angeordnet. Das Deckelelement 18 umfasst dabei insbesondere zwei miteinander verbundene und übereinander angeordnete Deckellaschen 30, 32. Eine weitere Deckellasche 116 ist an der hinteren Seitenwand 54, die wie die vordere Seitenwand 58 schmäler ausgebildet ist als die Seitenwände 52, 56, über eine Biegelinie 86 angelenkt. Die beiden Deckellaschen 30, 32 sind ebenfalls über Biegelinien 82, 80 mit den Seitenwänden 56, 52 verbunden. An dem der Deckellasche 116 gegenüberliegenden Ende der Verpackung 10 ist eine Sperrlasche 20 ausgebildet, die über eine zumindest teilweise perforierte Biegelinie 84 mit der vorderen Seitenwand 58 verbunden ist. Man erkennt, dass die Sperrlasche 20 mit einer Innenseite der in den Verpackungsinnenraum 14 ragenden Deckellasche 30 im Bereich einer Ausschüttöffnung 22 verbunden ist. Des Weiteren weist die Sperrlasche 20 einen ersten Abdeckbereich 26 zur Abdeckung der Ausschüttöffnung 22 und einen zweiten Abdeckbereich 28 zur Abdeckung einer innenliegenden Öffnung 24 auf. Dabei ist die innenliegende Öffnung 24 zwischen dem Verpackungsinnenraum 14 und einer Dosierkammer 12 ausgebildet. Die Dosierkammer 12 ist innerhalb des Verpackungsinnenraums 14 angeordnet (vergleiche auch Figur 2).

Des Weiteren weist die Verpackung 10 einen Öffnungs- und Verschlussmechanismus 16 zum Öffnen und Schließen der Verpackung 10 auf.

Hierfür ist die Sperrlasche 20 mit dem Deckelelement 18 im Bereich der Ausschüttöffnung 22 verbunden, wobei die Sperrlasche 20 derart ausgebildet ist, dass sie im geschlossenen Zustand der Verpackung 10 die Ausschüttöffnung 22 verschließt und die innenliegende Öffnung 24 zwischen dem Verpackungsinnenraum 14 und der Dosierkammer 12 freigibt und in geöffnetem Zustand der Verpackung 10 die Ausschüttöffnung 22 freigibt und die innenliegende Öffnung 24 verschließt. In Figur 1 ist eine Zwischenstellung dargestellt, bei der die innenliegende Öffnung 24 noch nicht ganz durch die Sperrlasche 20 verschlossen ist. Man erkennt, dass die Sperrlasche 20 aus einem ersten Abdeckbereich 26 zur Abdeckung der Ausschüttöffnung 22 und einem zweiten Abdeckbereich 28 zur Abdeckung der innenliegenden Öffnung 24 besteht. Des Weiteren erkennt man, dass jeweils ein erster Teilbereich 38, 40 der Deckellaschen 30, 32 über jeweils mindestens eine, die Ausschüttöffnung 22 begrenzende Biegelinie 34, 36 von jeweils einem zweiten Teilbereich 42, 44 getrennt ist. Die Biegelinien 34, 36 sind dabei ungefähr übereinander angeordnet und definieren die Grenze zwischen dem ersten Abdeckbereich 26 und dem zweiten Abdeckbereich 28 der Sperrlasche 20. Die Biegelinien 34, 36 wirken als Gelenk, um dessen Gelenkachse sich die Sperrlasche 20 bewegen kann.

In dem dargestellten Ausführungsbeispiel ist die Sperrlasche 20 im geschlossenen Zustand der Verpackung 10 über die Perforationslinie 84 mit der vorderen Seitenwand 58 einstückig verbunden. Auch die ersten Teilbereiche 38, 40 der Deckellaschen 30, 32 sind im geschlossenen Zustand der Verpackung 10 über Perforationslinien 64, 66 mit den jeweiligen seitlichen Seitenwänden 52, 56 der Verpackung 10 jeweils einstückig verbunden. In dem dargestellten Ausführungsbeispiel erkennt man, dass nach Öffnung der Verpackung 10 die Deckellaschen 30, 32 im Bereich ihrer ersten Teilbereiche 38, 40 mit der daran angeordneten Sperrlasche 20 entlang der Perforationslinien 64, 66, 84 von dem Verpackungskörper abgetrennt sind und die Ausschüttöffnung 22 freigeben. Auch die Griff- und Klemmlasche 46 ist im geschlossenen Zustand der Verpackung 10 über eine ihren Umfang definierende Perforationslinie 60 mit der vorderen Seitenwand 58 einstückig verbunden. Zwischen der Sperrlasche 20 und der Griff- und Klemmlasche 46 ist eine Biegelinie 62 ausgebildet. Man erkennt, dass im geöffneten Zustand der Verpackung 10 die Griff- und Klemmlasche 46 über den Verpackungsrand hinausragt. Zum Verschließen der Verpackung kann die Griff- und Klemmlasche 46 mit der zuvor in der vorderen Seitenwand 58 ausgebildeten Ausnehmung verrastet werden.

Figur 2 zeigt eine schematische Schnittdarstellung der Verpackung 10 gemäß Figur 1. Man erkennt, dass die Verpackung 10 im Inneren in zwei Bereiche aufgeteilt ist, nämlich den Verpackungsinnenraum 14 und die darin ausgebildete Dosierkammer 12. Zwischen der Dosierkammer 12 und dem Verpackungsinnenraum 14 mit dem Schüttgut 112 ist eine Innenwand 68 der Dosierkammer 12 angeordnet. Durch die Variation der Breite der Dosierkammer 12 können unterschiedliche Dosiermengen bestimmt werden. Zwischen der Dosierkammer 12 und dem Verpackungsinnenraum 14 ist zudem die innenliegende Öffnung 24 in der Innenwand 68 ausgebildet. Die innenliegende Öffnung 24 ist dabei im Deckelbereich der Verpackung 10 unterhalb der Ausschüttöffnung 22 ausgebildet.

Des Weiteren erkennt man, dass das Deckelelement 18 aus den beiden Deckellaschen 30, 32 besteht. Diese sind übereinander gelegt und miteinander verbunden. Die Sperrlasche 20 ist dabei an der Innenseite der in den Verpackungsraum 14 ragenden Deckellasche 30 im Bereich der Ausschüttöffnung 22 angeordnet. Der von der Deckellasche 30 überdeckte Bereich der Sperrlasche 20, nämlich der erste Abdeckbereich 26 dient zur Abdeckung der Ausschüttöffnung 22. Der nicht von der Deckellasche 30 umgebende Bereich der Sperrlasche 20, nämlich der zweite Abdeckbereich 28 dient zum Verschluss der innenliegenden Öffnung 24. Man erkennt, dass im geschlossenen Zustand der Verpackung 10 die Ausschüttöffnung 22 durch die Sperrlasche 20 verschlossen ist. Zudem ist die innenliegende Öffnung 24 zwischen dem Verpackungsinnenraum 14 und der Dosierkammer 12 freigegeben. Im geöffneten Zustand der Verpackung 10 wird die Ausschüttöffnung 22 freigegeben und die innenliegende Öffnung 24 durch den zweiten Abdeckbereich 28 der Sperrlasche 20 verschlossen.

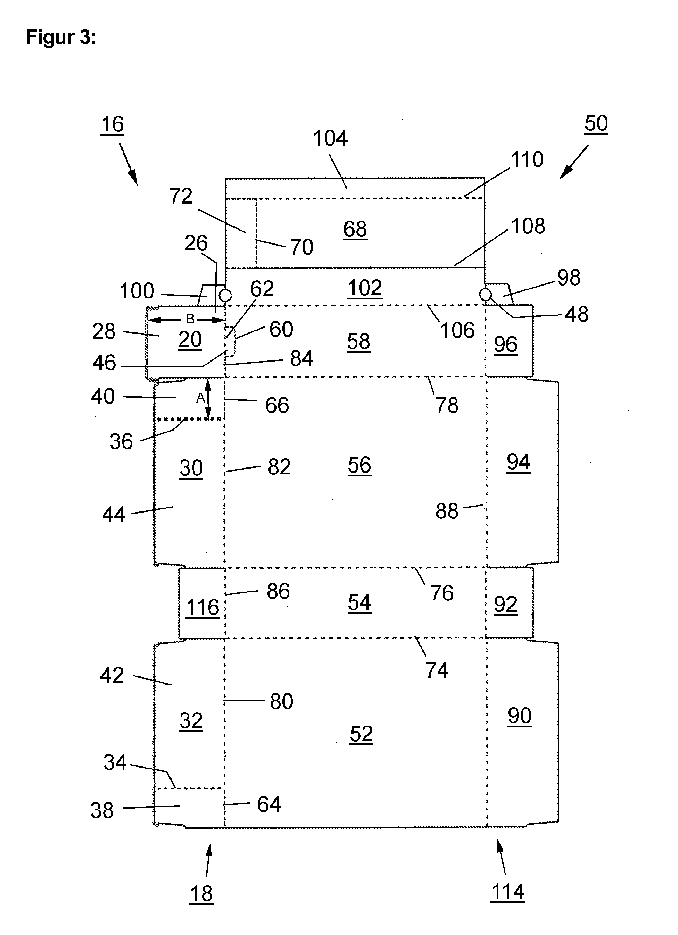

Figur 3 zeigt eine Darstellung eines Zuschnitts 50 der in den Figuren 1 und 2 gezeigten Verpackung 10. Insbesondere dient der Zuschnitt zur Herstellung einer Verpackung 10 zur Aufbewahrung und dosierten Abgabe von Waren, insbesondere von rieselfähigem Schüttgut. Man erkennt, dass der Zuschnitt 50 vier Seitenwände 52, 54, 56, 58 zur Ausbildung eines Verpackungsinnenraums im gefalteten Zustand des Zuschnitts 50 umfasst. Die Seitenwände 52, 54, 56, 58 sind über die drei Biegelinien 74, 76, 78 miteinander verbunden. Des Weiteren erkennt man, dass der Zuschnitt 50 einstückig ausgebildet ist, wobei zur Ausbildung eines Öffnungs- und Verschlussmechanismus 16 (vergleiche auch Figuren 1 und 2) unter anderem die Sperrlasche 20 ausgebildet ist, die über die Biege- und Perforationslinie 84 mit der vorderen Seitenwand 58 im Deckelbereich des Zuschnitts 50 verbunden und davon abtrennbar ist. Des Weiteren umfasst der Öffnungs- und Verschlussmechanismus 16 die beiden Deckellaschen 30, 32, die ebenfalls im Deckelbereich des Zuschnitts 50 angeordnet sind. Die Deckellaschen 30, 32 sind dabei über die Biegelinien 80, 82 mit den seitlichen Seitenwänden 52, 56 verbunden. Eine weitere Deckellasche 116 ist über eine Biegelinie 86 an der hinteren, schmalen Seitenwand 54 angeordnet. Man erkennt die Aufteilung der Deckellaschen 30, 32 jeweils in einen ersten Teilbereich 38, 40 und einen zweiten Teilbereich 42, 44. Die Biegelinien 34, 36 trennen dabei jeweils die ersten Teilbereiche 38, 40 von den zweiten Teilbereichen 42, 44. Zudem wird deutlich, dass eine Länge A der ersten Teilbereiche 38, 40 kleiner ist als eine Länge B der Sperrlasche 20. Die Länge A der ersten Teilbereiche 38, 40 wird dabei durch den Abstand zwischen den Biegelinien 34, 36 und dem dem jeweiligen zweiten Teilbereich 42, 44 gegenüberliegenden Ende der Laschen 30, 32 definiert. Die Länge B der Sperrlasche 20 wird durch die Biege- und Perforationslinie 84 und dem entsprechenden, dieser Linie gegenüberliegenden Ende der Sperrlasche 20 definiert. Man erkennt, dass in dem dargestellten Ausführungsbeispiel die Biegelinie 36 doppelt ausgebildet ist. Dadurch wird das Biegen der beiden übereinander liegenden ersten Teilbereiche 38, 40 im gefalteten Zustand der Verpackung 10 erleichtert.

Zudem erkennt man, dass die Biegelinien 80, 82 entlang der ersten Teilbereiche 38, 40 der Deckellaschen 30, 32 perforiert, nämlich als Perforationslinien 64, 66 ausgebildet sind.

Das Bodenelement 114 der Verpackung 10 in gefaltetem Zustand wird durch die Bodenlaschen 90, 92, 94 und 96 gebildet. Die Bodenlaschen 90, 92, 94, 96 sind dabei jeweils über eine gemeinsame Biegelinie 88 mit den Seitenwänden 52, 54, 56, 58 verbunden.

Des Weiteren wird deutlich, dass die Sperrlasche 20 in dem dargestellten Ausführungsbeispiel die Griff- und Klemmlasche 46 umfasst, wobei diese über eine ihren Umfang definierende Perforationslinie 60 mit der vorderen Seitenwand 58 einstückig verbunden ist. Über die Biegelinie 62 ist die Griff- und Klemmlasche 46 mit der Sperrlasche 20 auch nach Abtrennung von der vorderen Seitenwand 58 gelenkig verbunden. Die Sperrlasche 20 ist zudem in den ersten und zweiten Abdeckbereich 26, 28 unterteilt.

Zur Ausbildung einer Dosierkammer 12 ist die vordere Seitenwand 58 an der der seitlichen Seitenwand 56 gegenüberliegenden Seite mit einem Wandelement 102 über eine Biegelinie 106, wobei das Wandelement 102 über eine weitere, parallel zur Biegelinie 106 verlaufende Biegelinie 108 mit der Innenwand 68 der Dosierkammer 12 verbunden ist. An der der Biegelinie 108 gegenüberliegenden Seite weist die Innenwand 68 zudem eine Klebelasche 104 auf, die über eine parallel zur Biegelinie 108 verlaufende Biegelinie 110 mit dieser verbunden ist. Im gefalteten Zustand der Verpackung 10 kommt dabei das Wandelement an der Innenseite der Seitenwand 56 zu liegen, die Klebelasche 104 wird mit der gegenüberliegenden Seitenwand 52 verbunden. Das Wandelement 102 weist zudem jeweils im Deckel- und Bodenbereich eine Klebelasche 98, 100 auf, die mit der Deckellasche 30 und der Bodenlasche 94 verbunden werden. Dabei sind die Klebelaschen 98, 100 jeweils über eine Biegelinie mit dem Wandelement 102 verbunden, wobei im Bereich der Biegelinien Ausnehmungen 48 ausgebildet sind, die das Biegen der Klebelaschen 98, 100 um die entsprechenden Biegelinien erleichtern.

Schließlich erkennt man, dass zur Ausbildung der innenliegenden Öffnung 24 ein Verschlusselement 72 im Deckelbereich des Zuschnitts 50 mittels einer Perforationslinie 70 in der Innenwand 68 ausgeprägt ist.

Die beschriebene Verpackung wie auch der Zuschnitt zur Herstellung der beschriebenen Verpackung besteht üblicherweise aus Karton, Papier oder Kunststoff. Auch andere geeignete Materialien sind denkbar.

## Patentansprüche

1. Verpackung zur Aufbewahrung und dosierten Abgabe von Waren, insbesondere von rieselfähigem Schüttgut, umfassend eine Dosierkammer (12) die innerhalb eines Verpackungsinnenraums (14) angeordnet ist und einen Öffnungs- und Verschlussmechanismus (16) zum Öffnen und Schließen der Verpackung (10),
**dadurch gekennzeichnet,**
**dass** der Öffnungs- und Verschlussmechanismus (16) mindestens eine mit einem Deckelelement (18) der Verpackung (10) verbundene Sperrlasche (20) umfasst, wobei die Sperrlasche (20) derart ausgebildet ist, dass sie in geschlossenem Zustand der Verpackung (10) mindestens eine Ausschüttöffnung (22) verschließt und mindestens eine innenliegende Öffnung (24) zwischen dem Verpackungsinnenraum (14) und der Dosierkammer (12) freigibt und in geöffnetem Zustand der Verpackung (10) die Ausschüttöffnung (22) freigibt und die innenliegende Öffnung (24) verschließt.

2. Verpackung nach Anspruch 1,
**dadurch gekennzeichnet,**
**dass** die Sperrlasche (20) aus einem ersten Abdeckbereich (26) zur Abdeckung der Ausschüttöffnung (22) und einem zweiten Abdeckbereich (28) zur Abdeckung der innenliegende Öffnung (24) ausgebildet ist.

3. Verpackung nach Anspruch 1 oder 2,
**dadurch gekennzeichnet,**
**dass** das Deckelelement (18) aus mindestens zwei miteinander verbundenen und übereinander angeordneten Deckellaschen (30, 32) besteht, wobei die Sperrlasche (20) mit einer Innenseite der in den Verpackungsinnenraum (14) ragenden Deckellasche (30) in Bereich der Ausschüttöffnung (22) zumindest teilweise verbunden ist.

4. Verpackung nach Anspruch 3,
**dadurch gekennzeichnet,**
**dass** jeweils ein erster Teilbereich (38, 40) der Deckellaschen (30, 32) über jeweils mindestens eine, die Ausschüttöffnung (22) begrenzende Biegelinie (34, 36) von jeweils einem zweiten Teilbereich (42, 44) getrennt ist, wobei die Biegelinien (34, 36) ungefähr übereinander angeordnet sind und die Grenze zwischen dem ersten Abdeckbereich (26) und dem zweiten Abdeckbereich (28) der Sperrlasche (20) definieren.

5. Verpackung nach einem der vorhergehenden Ansprüche,
**dadurch gekennzeichnet,**
**dass** Sperrlasche (20) eine über den Verpackungsrand ragende Griff- und Klemmlasche (46) aufweist.

6. Verpackung nach einem der vorhergehenden Ansprüche,
**dadurch gekennzeichnet,**
**dass** die Sperrlasche (20) im geschlossenen Zustand der Verpackung (10) über eine Perforationslinie (84) mit einer vorderen Seitenwand (58) der Verpackung (10) einstückig verbunden ist.

7. Verpackung nach einem der Ansprüche 5 oder 6,
**dadurch gekennzeichnet,**
**dass** Griff- und Klemmlasche (46) im geschlossenen Zustand der Verpackung (10) über eine ihren Umfang definierende Perforationslinie (60) mit der vorderen Seitenwand (58) der Verpackung (10) einstückig verbunden ist.

8. Verpackung nach einem der Ansprüche 4 bis 7,
**dadurch gekennzeichnet,**
**dass** der erste Teilbereich (38) der Deckellasche (32) im geschlossenen Zustand der Verpackung (10) über eine Perforationslinie (64) mit einer seitlichen Seitenwand (52) der Verpackung (10) und der erste Teilbereich (40) der Deckellasche (30) im geschlossenen Zustand der Verpackung (10) über eine Perforationslinie (66) mit einer seitlichen Seitenwand (56) der Verpackung (10) jeweils einstückig verbunden sind.

9. Verpackung nach einem der vorhergehenden Ansprüche,
**dadurch gekennzeichnet,**
**dass** die Dosierkammer (12) eine innerhalb des Verpackungsinnenraums (14) angeordnete Innenwand (68) mit der innenliegenden Öffnung (24) umfasst, wobei die innenliegende Öffnung (24) vor einem ersten Öffnen der Verpackung (10) verschlossen ausgebildet ist.

10. Verpackung nach Anspruch 9,
**dadurch gekennzeichnet,**
**dass** die innenliegende Öffnung (24) mittels einem einstückig über eine Perforationslinie (70) mit der Innenwand (68) verbundenen Verschlusselement (72) verschlossen ist.

11. Zuschnitt zur Herstellung einer Verpackung zur Aufbewahrung und dosierten Abgabe von Waren, insbesondere von rieselfähigem Schüttgut, mit mittels drei Biegelinien (74, 76, 78) verbundenen Seitenwänden (52, 54, 56, 58) zur Ausbildung eines Verpackungsinnenraums in gefaltetem Zustand des Zuschnitts (50),
**dadurch gekennzeichnet,**
**dass** der Zuschnitt (50) einstückig ausgebildet ist, wobei zur Ausbildung eines Öffnungs- und Verschlussmechanismus (16) mindestens eine Sperrlasche (20), die über eine Biege- und Perforationslinie (84) mit der vorderen Seitenwand (58) im Deckelbereich des Zuschnitts (50) verbunden und davon abtrennbar ist und mindestens zwei Deckellaschen (30, 32) im Deckelbereich des Zuschnitts (50) angeordnet sind und die Deckellaschen (30, 32) über Biegelinien (80, 82) mit den seitlichen Seitenwänden (52, 56) im Deckelbereich des Zuschnitts (50) verbunden sind, wobei die Deckellaschen (30, 32) jeweils einen ersten Teilbereich (38, 40) aufweisen, der über jeweils mindestens eine Biegelinie (34, 36) von jeweils einem zweiten Teilbereich (42, 44) getrennt ist, wobei eine Länge A der ersten Teilbereiche (38, 40) kleiner ist als eine Länge B der Sperrlasche (20).

12. Zuschnitt nach Anspruch 11,
**dadurch gekennzeichnet,**
**dass** die Biegelinien (80, 82) entlang der ersten Teilbereiche (38, 40) der Deckellaschen (30, 32) perforiert ausgebildet sind.

13. Zuschnitt nach Anspruch 11 oder 12,
**dadurch gekennzeichnet,**
**dass** Sperrlasche (20) eine Griff- und Klemmlasche (46) aufweist, wobei die Griff- und Klemmlasche (46) über eine ihren Umfang definierende Perforationslinie (60) mit der vorderen Seitenwand (58) der Verpackung (10) einstückig verbunden ist.

14. Zuschnitt nach einem der Ansprüche 11 bis 13,
**dadurch gekennzeichnet,**
**dass** zur Ausbildung einer Dosierkammer (12) die vordere Seitenwand (58) an der der seitlichen Seitenwand (56) gegenüberliegenden Seite mit einem Wandelement (102) über eine Biegelinie (106) verbunden ist, wobei das Wandelement (102) über eine weitere, parallel zur Biegelinie (106) verlaufende Biegelinie (108) mit einer Innenwand (68) verbunden ist und die Innenwand (68) eine Klebelasche (104) aufweist, die über eine parallel zur Biegelinie (108) verlaufende Biegelinie (110) mit der Innenwand (68) verbunden ist.

15. Zuschnitt nach Anspruch 14,
**dadurch gekennzeichnet,**
**dass** zur Ausbildung einer innenliegenden Öffnung (24) mindestens ein Verschlusselement (72) im Deckelbereich des Zuschnitts (50) mittels einer Perforationslinie (70) in der Innenwand (68) ausgeprägt ist.
